# EUROPEAN PATENT APPLICATION

(11) **EP 4 518 440 A1**
(43) Date of publication of application: **05.03.2025**
(21) Application number: 22938909.3
(22) Date of filing: 26.04.2022
(51) Int. Cl.: H04W 52/02

(54) **COMMUNICATION METHOD, TERMINAL, AND WIFI DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); HE, Chuanfeng, Dongguan, Guangdong 523860 (CN)
(74) Representative: Novagraaf Technologies
(86) International application number: PCT/CN2022/089169
(87) International publication number: WO 2023/206052

(57) **Abstract**

The present application provides a communication method, a terminal, and a WIFI device. The communication method comprises: a terminal backscatters a first signal on a first channel (S720), wherein the first signal comprises a first preamble and/or a first carrier, and the first signal is sent by a WIFI device (S710). When the terminal occupies the first channel for backscatter communication, other WIFI devices can determine, by detecting the first preamble on the basis of a carrier detection method, that the first channel is occupied, and/or, other WIFI devices can determine, by detecting the first carrier on the basis of an energy detection method, that the first channel is occupied, thereby avoiding a situation where other WIFI devices also occupy the first channel.

## Description

### TECHNICAL FIELD

The present disclosure relates to the field of communication technologies, and more specifically, to a communication method, a terminal, and a Wi-Fi device.

### BACKGROUND

Terminals designed for backscatter typically have low complexity and are thus unable to generate preambles for channel sensing in a Wi-Fi system. Consequently, the terminal fails to send any preamble when performing backscatter communication on a channel of an unlicensed frequency band. As such, other Wi-Fi devices in the Wi-Fi system fail to sense that the channel has been occupied by the terminal due to a failure to detect any preamble which is actually unavailable. In this case, it is likely that the other Wi-Fi devices still transmit data over this channel, which causes interference or conflict.

### SUMMARY

The present disclosure provides a communication method, a terminal, and a Wi-Fi device.

In a first aspect, a communication method is provided. The communication method includes backscattering, by a terminal, a first signal on a first channel, wherein the first signal includes a first preamble and/or a first carrier, and the first signal is sent by a Wi-Fi device.

In a second aspect, a communication method is provided. The communication method includes: sending, by a Wi-Fi device, a first signal on a first channel, wherein the first signal includes a first preamble and/or a first carrier, and the first signal is used to be backscattered by a terminal.

In a third aspect, a terminal is provided. The terminal includes a backscattering unit configured to backscatter a first signal on a first channel, wherein the first signal includes a first preamble and/or a first carrier, and the first signal is sent by a Wi-Fi device.

In a fourth aspect, a Wi-Fi device is provided. The Wi-Fi device includes: a sending unit configured to send a first signal on a first channel, wherein the first signal includes a first preamble and/or a first carrier, and the first signal is used to be backscattered by a terminal.

In a fifth aspect, a terminal is provided. The terminal includes a processor, a memory, and a communication interface, wherein the memory is configured to store one or more computer programs, and the processor, when calling and running one or more programs in the memory, is caused to perform the method described in the first aspect.

In a sixth aspect, a Wi-Fi device is provided. The Wi-Fi device includes a processor, a memory, and a communication interface, wherein the memory is configured to store one or more computer programs, and the processor, when calling and running one or more programs in the memory, is caused to perform the method described in the second aspect.

In a seventh aspect, some embodiments of the present disclosure provide a communication system, which includes the above-mentioned terminal and/or Wi-Fi device. In another possible design, the system may also include other devices that interact with the terminal or network device in the solution provided in the embodiments of the present disclosure.

In an eighth aspect, some embodiments of the present disclosure provide a computer-readable storage medium, wherein the computer-readable storage medium stores one or more programs, and the one or more programs, when loaded and run by a terminal, cause the terminal to perform the method described in the first aspect.

In a ninth aspect, some embodiments of the present disclosure provide a computer-readable storage medium, wherein the computer-readable storage medium stores one or more computer programs, and the one or more programs, when loaded and run by a Wi-Fi device, cause the Wi-Fi device to perform the method described in the second aspect.

In a tenth aspect, some embodiments of the present disclosure provide a computer program product, wherein the computer program product includes a non-transitory computer-readable storage medium storing one or more computer programs, and the one or more computer programs, when loaded and executed by a terminal, cause the computer to perform the method described in the first aspect. In some implementations, the computer program product may be a software installation package.

In an eleventh aspect, some embodiments of the present disclosure provide a computer program product, wherein the computer program product includes a non-transitory computer-readable storage medium storing one or more computer programs, and one or more computer programs, when loaded and executed by a Wi-Fi device, cause the Wi-Fi device to perform the method described in the second aspect. In some implementations, the computer program product may be a software installation package.

In a twelfth aspect, some embodiments of the present disclosure provide a chip, which includes a memory and a processor. The processor, when calling and running one or more programs stored in the memory, causes a device equipped with the chip to perform the method described in the first or second aspect.

In a thirteenth aspect, a computer program product is provided, including one or more programs, wherein the one or more programs, when loaded and executed by a computer, cause the computer to perform the method described in the first aspect.

In a fourteenth aspect, a computer program product is provided, including one or more programs, wherein the one or more programs, when loaded and executed by a computer, cause the computer to perform the method described in the second aspect.

In a fifteenth aspect, a computer program is provided, wherein the computer program enables a computer to carry out the method described in the first aspect.

In a sixteenth aspect, a computer program is provided, wherein the computer program enables a computer to carry out the method described in the second aspect.

When the terminal occupies the first channel for backscattering communication, other Wi-Fi devices determine that the first channel is occupied by detecting the first preamble based on a carrier sense method, and/or other Wi-Fi devices determine that the first channel is occupied by detecting the first carrier based on an energy detection method, thereby avoiding the situation where other Wi-Fi devices also occupy the first channel.

### BRIEF DESCRIPTION OF DRAWINGS

FIG. 1 is a wireless communication system used in some embodiments of the present disclosure;
FIG. 2 shows a configuration of an energy harvesting module;
FIG. 3 shows the backscattering communication principle of some embodiments of the present disclosure;
FIG. 4 shows a circuit diagram of a terminal based on a resistance load modulation technique;
FIG. 5 is an exemplary diagram of a data frame including a preamble;
FIG. 6 is another example diagram of a data frame including a preamble;
FIG. 7 is a schematic flowchart of a communication method according to some embodiments of the present disclosure;
FIG. 8 is a schematic diagram of resources according to some embodiments of the present disclosure;
FIG. 9 is another schematic diagram of resources according to some embodiments of the present disclosure;
FIG. 10 is another schematic diagram of resources according to some embodiments of the present disclosure;
FIG. 11 is another schematic diagram of resources according to some embodiments of the present disclosure;
FIG. 12 is another schematic diagram of resources according to some embodiments of the present disclosure;
FIG. 13 is a schematic structural diagram of a terminal according to some embodiments of the present disclosure;
FIG. 14 is a schematic structural diagram of a Wi-Fi device according to some embodiments of the present disclosure; and
FIG. 15 is a schematic structural diagram of a communication device according to some embodiments of the present disclosure.

### DETAILED DESCRIPTION

The technical solution in the present disclosure will be described below in conjunction with the accompanying drawings.

### Zero-power communication technology

With the development of wireless communication technologies, it is hoped that wireless communication systems are integrated with various vertical industries such as logistics, manufacturing, transportation, and energy. For example, wireless communication systems are integrated with industrial wireless sensor networks (IWSNs). As another example, wireless communication systems are integrated with smart logistics and smart warehousing. As another example, wireless communication systems are integrated with smart home networks.

However, in these industries, terminals are usually required to have low cost, small size (such as ultrathin), maintenance-free, long life and other characteristics. Therefore, in order to meet the above conditions, zero-power communication technology is used between network devices and terminals for communication. In this case, the terminal is also referred to as a "zero-power communication terminal". For example, radio frequency identification (RFID) technology is a typical zero-power communication technology. RFID technology uses the spatial coupling of wireless radio frequency signals to achieve contactless automatic transmission and identification of tag information.

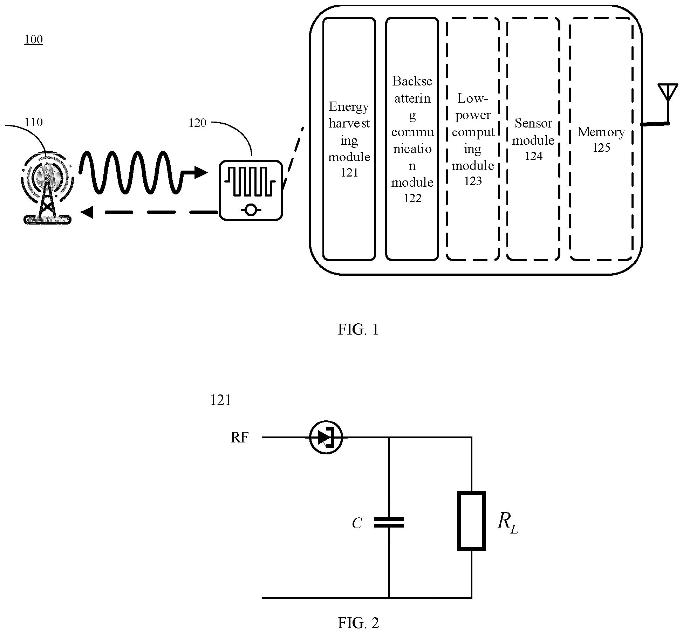

Zero-power communication technology and zero-power terminals are described hereinafter in conjunction with FIGS. 1 to 4. FIG. 1 is an architecture of a zero-power communication system 100 applicable to some embodiments of the present disclosure. The architecture shown in FIG. 1 includes communication devices such as a network device 110 and a terminal 120. The network device 110 communicates with the terminal device 120. The network device 110 provides communication coverage for a specific geographical area and communicates with the terminal device 120 located in the coverage area.

The network device 110 is configured to send a wireless power supply signal to the terminal 120 to supply power to the terminal. Accordingly, the terminal 120 sends data to the network device 110 or other communication devices through a backscattered signal. In some implementations, the above-mentioned wireless power supply signal also carries data or controls information from the network device 110 to the terminal 120. Of course, the above-mentioned wireless power supply signal is also used only for power supply, which is not limited in the embodiments of the present disclosure.

It should be noted that FIG. 1 exemplarily shows a network device and a terminal. Optionally, the communication system 100 includes a plurality of network devices. Furthermore, the coverage area of each network device includes other numbers of terminal devices, which is not limited in the embodiments of the present disclosure.

It should be understood that the technical solutions of the embodiments of the present disclosure are applied to various communication systems, such as: the 5th generation (5G) system or new radio (NR), long term evolution (LTE) system, LTE frequency division duplex (FDD) system, LTE time division duplex (TDD), cellular Internet of Things, Wi-Fi communication system, etc. The technical solutions provided in the present disclosure are also applied to future communication systems, such as the sixth generation mobile communication system, etc.

The terminal in the embodiments of the present disclosure is also referred to as user equipment (UE), access terminal, user unit, user station, mobile station (MS), mobile terminal (MT), remote station, remote terminal, mobile device, user terminal, terminal device, wireless communication device, user agent or user device. The terminal device in the embodiments of the present disclosure provides voice and/or data connectivity to a user, and is configured to connect people, objects, and machines, such as household appliances, sensors, electronic tags with wireless connection functions, etc. Electronic tags are also referred to as "radio frequency tags". In radio frequency identification (RFID) technology, electronic tags are also referred to as "RFID tags". The terminals in the embodiments of the present disclosure are wireless terminals in smart homes, wireless terminals in IWSNs, wireless terminals in smart logistics and smart warehousing, wireless terminals in self-driving, wireless terminals in remote medical surgery, wireless terminals in smart grids, wireless terminals in transportation safety, wireless terminals in smart cities, etc.

The network device in the embodiments of the present disclosure is a device for communicating with a terminal device. If the terminal is an electronic tag, the network device is a reader/writer for reading and writing the electronic tag. The reader/writer is a reader/writer based on RFID technology, for example.

The network device and the terminal device may be deployed on land, including indoors or outdoors, handheld or vehicle-mounted; they may also be deployed on the water surface; they may also be deployed on aircraft, balloons, and satellites in the air. The embodiments of the present disclosure do not limit the scenarios in which the network device and terminal device are located.

**It** should be understood that all or part of the functions of the communication device in the present disclosure may also be implemented by software functions running on hardware, or by virtualization functions instantiated on a platform (e.g., a cloud platform).

Taking RFID technology as an example, the terminal is an electronic tag and the network device is a reader/writer. The electronic tag is composed of a coupling component and a chip. Each electronic tag has a unique electronic code. The electronic tag is placed on a target to be detected to achieve the purpose of marking the target object. The reader/writer can not only read the information on the electronic tag, but also write the information on the electronic tag. The reader/writer provides the electronic tag with the energy required for communication. After the electronic tag enters the electromagnetic field, it receives the radio frequency signal emitted by the reader/writer. The electronic tag uses the energy obtained from the electromagnetic field generated in the space to transmit the information stored in the electronic tag. The reader/writer reads the information and decodes it to identify the electronic tag.

As shown in FIG. 1, the terminal 120 includes an energy harvesting module 121 and a backscattering communication module 122. The energy harvesting module 121 and the backscattering communication module 122 are introduced below in conjunction with FIGS. 2 to 4, and are not described here for brevity. In some cases, the terminal 120 also includes a low-power computing module 123. The low-power computing module 123 is configured to provide computing functions for the terminal, such as data processing, etc. In other cases, the terminal 120 also includes a sensor 124 for collecting external information (e.g., ambient temperature, ambient humidity, etc.). In other cases, the terminal 120 also includes a memory 125 for storing some information (e.g., external information collected by the above-mentioned sensors, or such as item identification, etc.).

The energy harvesting module 121 is configured for power harvesting. The harvested energy includes various forms of energy such as radio waves, solar energy, light energy, thermal energy, mechanical energy, etc. The energy harvested by the energy harvesting module 121 is configured to drive the device to work, thereby achieving battery-free operation. In some implementations, energy is harvested through a wireless power supply signal sent by a network device. The wireless power supply signal is a radio frequency signal (RF) transmitted by a network device. Therefore, the energy harvesting module is also referred to as a "radio frequency energy harvesting module" (abbreviated as "RF module").

FIG. 2 shows a structure of the energy harvesting module. As shown in FIG. 2, the energy harvesting module may harvest electromagnetic wave energy in space through electromagnetic induction, thereby driving the load circuit (including low-power computing, sensors, etc.). The energy harvesting module shown in FIG. 2 is an RF module. For example, the energy harvesting module 121 stores the harvested energy in a capacitor C, which is the charging process of the capacitor C. When the charging process of the capacitor C is completed, the capacitor C starts to discharge to provide energy for the terminal's operation.

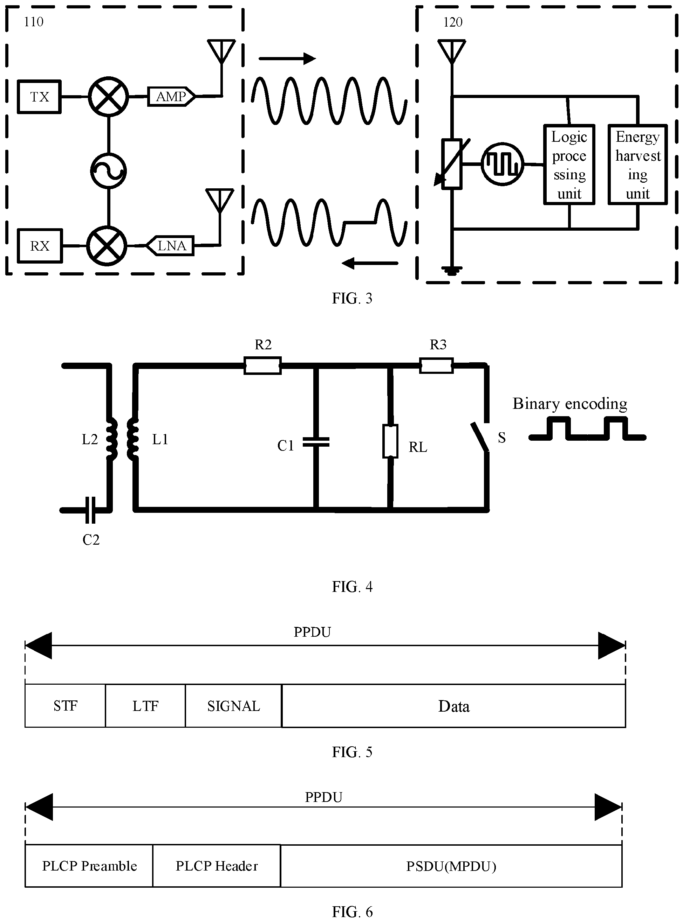

The above-mentioned backscattering communication module 122 is used for backscattering communication between the terminal and the network device. The backscattering communication principle of the embodiments of the present disclosure is introduced below in conjunction with FIG. 3. Referring to FIG. 3, the terminal 120 receives a wireless signal (such as a carrier) sent by the network device 110, and modulates the wireless signal to load data to be sent. Finally, the modulated signal is radiated from an antenna. This information transmission process is referred to as backscattering communication.

In some implementations, a transport (TX) path of the network device 110 is provided with other devices for processing the signal to be sent, such as an amplifier (AMP), etc. A receive (RX) path of the network device 110 is provided with other devices for processing the received signal, such as a low noise amplifier (LNA), etc.

In some implementations, the terminal 120 is provided with an energy harvesting unit for harvesting energy from a wireless power supply signal from the network device. The terminal 120 is also provided with a low-power processing module (e.g., a logic processing unit as shown in FIG. 3) to perform corresponding computing functions.

It can be understood that in backscattering communication, the terminal 120 does not actively transmit signals, that is, backscattering communication is achieved by modulating the incoming signal. Secondly, the terminal 120 does not rely on the active power amplifier transmitter in the related art, and uses a low-power computing unit, thereby greatly reducing the hardware complexity. In addition, in backscattering communication, the terminal 120 combines energy harvesting to achieve battery-free communication.

It should be noted that, regardless of the network device 110 or the terminal 120, FIG. 3 only exemplarily shows a connection structure of a signal processing circuit, and the processing circuit of the network device 110 and/or the terminal 120 may include other components, which is not specifically limited in the embodiments of the present disclosure.

Backscattering communication and load modulation function are inseparable. Load modulation is a method commonly used by terminals to transmit data to network devices. The load modulation function is understood as adjusting and controlling circuit parameters of the terminal's oscillation loop according to the beat of the data stream, so that the terminal's impedance and other parameters and phase change accordingly, thereby completing the modulation process.

The load modulation function is implemented by two methods: resistance load modulation and capacitance load modulation. FIG. 4 shows a circuit diagram of a terminal based on resistance load modulation technology. It should be noted that the circuit shown in FIG. 4 implements the load modulation technology in a manner similar to the implementation of the existing circuit for implementing the load modulation technology. For the sake of simplicity, the functions of the resistor R₂, the load R_{L}, the capacitors C₁, C₂, and the inductors L₁, L₂ shown in FIG. 4 are not repeated.

In resistance load modulation, a resistor R₃ is connected in parallel to the load. The switch S is controlled based on the binary data stream to realize the connection or disconnection of the resistor R₃. In this way, the connection and disconnection of the resistor R₃ cause the change of the circuit voltage, and the change of the circuit voltage controls the amplitude of the backscattered signal of the terminal, thereby realizing the modulation of the backscattered signal, that is, performing amplitude-shift keying (ASK) modulation on the backscattered signal.

Similarly, in capacitance load modulation, a capacitor is connected in parallel with the load, and the capacitor is turned on and off based on a binary data stream to change the circuit resonant frequency, thereby changing the operating frequency of the backscattered signal to achieve frequency-shift keying (FSK) modulation.

The data transmitted by the terminal (such as an electronic tag) is represented by different encoding methods to represent binary "1" and "0". Commonly used encoding methods in zero-power communication technology include non-return zero (NRZ) encoding, Manchester encoding, unipolar RZ encoding, differential binary phase (DBP) encoding, Miller encoding, differential encoding, etc. In other words, different pulse signals may be used to represent "1" and "0".

As mentioned above, the terminal uses load modulation to modulate the incoming signal (i.e., the signal sent by the network device) to achieve the backscattering communication process. Therefore, the terminal in backscattering communication usually has the following advantages.

The first advantage is that since the terminal does not need to actively transmit signals, there is no need to construct a complex RF path. For example, the RF path does not need to include devices such as power amplifiers (PA) and RF filters, thereby reducing the cost and size of the terminal.

The second advantage is that since the terminal does not need to actively generate high-frequency signals, a high-frequency crystal oscillator is not required, thereby reducing the cost and size of the terminal.

The third advantage is that since the terminal may use the backscattering technology to communicate with the network device, the terminal consumes less energy during communication and does not even need to consume its own energy.

Based on the above introduction to zero-power communication technology, it may be seen that zero-power terminals consume very little energy for communication, or even no energy at all. Therefore, in zero-power communication technology, terminals are divided into three categories based on their energy sources and energy usage: passive zero-power terminals, semi-passive zero-power terminals, and active zero-power terminals.

### 1. Passive zero-power terminal.

Passive zero-power terminals usually do not need built-in batteries. When the terminal is close to the network device, it is in the near field formed by the antenna radiation of the network device. At this time, the antenna of the terminal generates an induced current through electromagnetic induction, which powers the terminal to achieve demodulation of the received signal and/or modulation and encoding of the signal to be transmitted.

As an implementation, the passive zero-power terminal is an electronic tag (i.e., a passive electronic tag). Accordingly, the network device is a reader/writer of the electronic tag, which is used to read the content in the electronic tag and/or to change the content in the electronic tag. When the passive electronic tag is close to the reader/writer, the electronic tag is in the near field formed by the antenna radiation of the reader/writer, and the antenna of the electronic tag generates an induced current through electromagnetic induction, and the induced current drives the chip circuit of the electronic tag. The chip circuit sends the identification information stored in the tag to the reader/writer through the electronic tag antenna.

It can be understood that the passive zero-power terminal does not require a built-in battery to drive either the forward link or the backward link, and is a true zero-power terminal.

### 2. Semi-passive zero-power terminal

The semi-passive zero-power terminal itself does not install a conventional battery, but uses the energy harvesting module 121 to harvest radio wave energy and stores the harvested energy in an energy storage unit (such as a capacitor). After the energy storage unit obtains energy, it supplies energy to the terminal to realize the demodulation of the received signal and/or the modulation and encoding of the signal to be transmitted. The semi-passive zero-power terminal inherits the advantages of the passive zero-power device, such as small size, light weight, low price, and long service life.

In one implementation, the semi-passive zero-power device is an electronic tag (i.e., a semi-active electronic tag). Accordingly, the network device is a reader/writer of the electronic tag. When there is no reader/writer access, the built-in battery of the semi-active electronic tag only provides power for a small number of circuits in the chip. When the reader/writer accesses, the built-in battery supplies power to the chip (e.g., an RFID chip) to increase the reading and writing distance of the electronic tag and improve the reliability of communication.

It can be understood that the semi-passive zero-power terminal does not require a built-in battery to drive either the forward link or the backward link. Although energy stored in capacitors is used during operation, the energy comes from the radio energy harvested by the energy harvesting module. Therefore, it is also a true zero-power terminal.

### 3. Active zero-power terminal

Active zero-power terminals may have built-in batteries. The batteries are used to drive the low-power chip circuits of the zero-power terminals, thereby achieving demodulation of forward link signals and modulation of backward link signals. For backscattering links, zero-power terminals use backscattering to transmit signals. Therefore, the zero-power consumption of this type of terminal is mainly reflected in the fact that the signal transmission of the backward link does not require the terminal's own power, but uses backscattering.

Powering with a built-in battery increases the communication distance of the zero-power terminal and improves the reliability of communication. Therefore, in some scenarios with relatively high requirements on communication distance, reading delay, etc., zero-power devices with built-in batteries (including active zero-power terminals and semi-passive zero-power terminals) are used.

In some implementations, the active zero-power terminal is an electronic tag (i.e., an active electronic tag), and the network device is a reader/writer. In this case, the energy for the electronic tag to work is provided by a battery. The battery, memory, and antenna together constitute an active electronic tag. Different from the passive radio frequency activation method, the active electronic tag continues to send information through a set frequency band before the battery is replaced.

### Unlicensed Spectrum

An unlicensed spectrum is a spectrum that is used for radio device communication. Unlicensed spectrum is considered as shared spectrum, that is, communication devices in different communication systems use the spectrum as long as they meet the regulatory requirements set by the country or region on the spectrum, without applying for exclusive spectrum authorization from the government. Unlicensed spectrum is also referred to as non-licensed spectrum.

In order to allow various communication systems that use unlicensed spectrum for wireless communication to coexist in a friendly manner on the spectrum, some countries or regions have stipulated regulatory requirements that must be met when using unlicensed spectrum. For example, in Europe, communication devices follow the "listen-before-talk" (LBT) principle, that is, before a communication device sends a signal on a channel of unlicensed spectrum, it needs to first perform channel sensing. Only when the channel sensing result is that the channel is idle, the communication device sends a signal. If the channel sensing result of the communication device on the channel of unlicensed spectrum is that the channel is busy, the communication device cannot send a signal. In order to ensure fairness, in one transmission, the duration of the communication device using the channel of unlicensed spectrum for signal transmission cannot exceed the maximum channel occupation time (MCOT).

Currently, systems that use unlicensed spectrum for communication include Wi-Fi communication systems, NR-U communication systems in 3GPP, etc.

Channel sensing (or channel monitoring) is a key technology in the LBT principle. Based on the channel sensing principle, the communication device performs LBT on the carrier of the unlicensed spectrum after the service arrives, and starts sending signals on the carrier after the LBT is successful. Different communication systems using unlicensed spectrum use different channel sensing technologies, and different channel sensing technologies must meet regulatory requirements to ensure fairness for each communication system when using the unlicensed spectrum. The following takes the Wi-Fi communication system as an example to introduce channel sensing in detail.

For the Wi-Fi communication system, channel sensing adopts the carrier sensing mechanism. The carrier sensing mechanism is divided into physical carrier sensing and virtual carrier sensing. Physical carrier sensing and virtual carrier sensing correspond to an indicator respectively. If any indicator indicates that the channel is busy, the channel is busy and the signal cannot be sent using the channel. Physical carrier sensing adopts the following three channel idle detection methods: energy detection (ED), carrier sense (CS) and energy detection & carrier sense (ED & CS). These detection methods are collectively referred to as clear channel assessment (CCA). The above three detection methods will be explained below.

Through energy detection, the energy level of the signal received on the channel is determined. When the power of the received signal is greater than a first threshold (for example, the threshold ED_threshold specified by the physical layer), the channel is considered occupied. When the power of the received signal is less than the first threshold, the channel is considered idle. The setting of the first threshold is related to the transmit power of the signal.

Carrier sense is also referred to as carrier monitoring. The carrier sense method determines whether the channel is idle by identifying a certain part of the data frame. Taking the 802.11 standard as an example, the preamble part in the physical layer convergence protocol (PLCP) header of the 802.11 data frame is identified. The preamble is described in detail in conjunction with FIGS. 5 and 6 below, and is not repeated here. The preamble in 802.11 is constructed using a specific sequence. The sequence is known to both the transmitter and the receiver and is used for frame synchronization and symbol synchronization. In the actual monitoring process, the node continuously samples the channel signal and uses the preamble for correlation operation. The correlation operation includes autocorrelation operation and cross-correlation operation. Autocorrelation operation is often performed in the technology based on orthogonal frequency division multiplexing (OFDM) (such as the 802.11a standard). Cross-correlation operation is often performed in the technology based on direct sequence spread spectrum (DSSS) (such as the 802.11b standard). Similar to the energy detection method, the result of the correlation calculation is compared with a second threshold. If the result is greater than the second threshold, it is considered that a signal of the channel is detected, that is, the channel is occupied. If the result is less than the second threshold, it is considered that no signal of the channel is detected, that is, the channel is idle.

In the energy detection & carrier sense technology, the detection technology used is determined according to the technology used in the specific physical layer. For example, DSSS technology combines energy detection and carrier sense. Frequency-hopping spread spectrum (FHSS) technology only uses carrier sense technology. In hybrid detection, if any detection result is detected to be out of limit, it is considered that the channel is occupied.

FIG. 5 and FIG. 6 are exemplary diagrams of a data frame including a preamble. When a Wi-Fi device sends a PLCP protocol data unit (PPDU) frame, the PPDU frame includes a physical layer header.

As shown in FIG. 5, in the provisions of some protocols (e.g., 802.11 a/g), the physical layer header includes a short training field (STF), a long training field (LTF), and a signal.

STF is composed of 10 short symbols (for example, symbols t1 -t10). Each short symbol is 0.8us. Through STF, a plurality of functions are realized. For example, through STF, frame synchronization and coarse frequency synchronization are realized. Based on symbols t1-t7, the main functions that are realized are signal detection, automatic gain control (AGC), and diversity selection. Based on symbols t8-t10, the main functions that are realized are coarse frequency synchronization, offset estimation, and timing synchronization.

Based on LTF, fine frequency synchronization and channel estimation are achieved. For the carrier sense method, STF is used as a preamble, that is, STF is auto-correlated or cross-correlated to complete carrier sense.

As shown in FIG. 6, in the provisions of some communication protocols (such as 802.11b), the first part of the physical layer header is a preamble. The preamble includes two parts, a synchronization part (sync) and a start of frame delimiter (SFD). Sync is configured to achieve frame synchronization. SFD is used as a start of frame identifier. PPDU also includes a physical service data unit (PSDU) or a message protocol data unit (MPDU).

As the application of the communication industry (such as 5G communication systems) increases, the types of objects connected by communication systems and application scenarios are increasing, which will also have higher requirements on the price and power consumption of terminals. Therefore, the application of battery-free, low-cost passive IoT devices has become a key technology for cellular IoT. It can be understood that zero-power devices enrich the types and number of communication network link terminals in related technologies and truly realize the interconnection of all things. For example, passive IoT devices are implemented based on zero-power communication systems (such as RFID technology) and extended on this basis to be applicable to cellular IoT.

There are many advantages to deploying zero-power communication systems in unlicensed frequency bands. For example, unlicensed spectrum is used for free, saving the expense of purchasing spectrum and saving operating costs. In addition, the unlicensed devices have a large user, such as a large number of widely deployed Wi-Fi devices in homes, enterprises, shopping malls, etc., which makes it easy to promote and deploy zero-power communication systems.

As mentioned above, the terminals in the zero-power communication system have the characteristics of low complexity and need to support low power consumption. Therefore, most terminals only support simple modulation methods, such as amplitude shift keying (ASK) modulation. For complex debugging methods, such as OFDM modulation supported by Wi-Fi devices, most zero-power terminals cannot support it. The preamble mentioned above for channel sensing in the Wi-Fi system is based on OFDM waveform modulation. It can be seen that the zero-power terminal cannot generate a preamble. If the terminal does not send a preamble when performing backscattering communication in the unlicensed frequency band, other Wi-Fi devices in the Wi-Fi system cannot detect that the channel is used by detecting the preamble, and may also use the channel for data transmission, thereby generating interference on the channel.

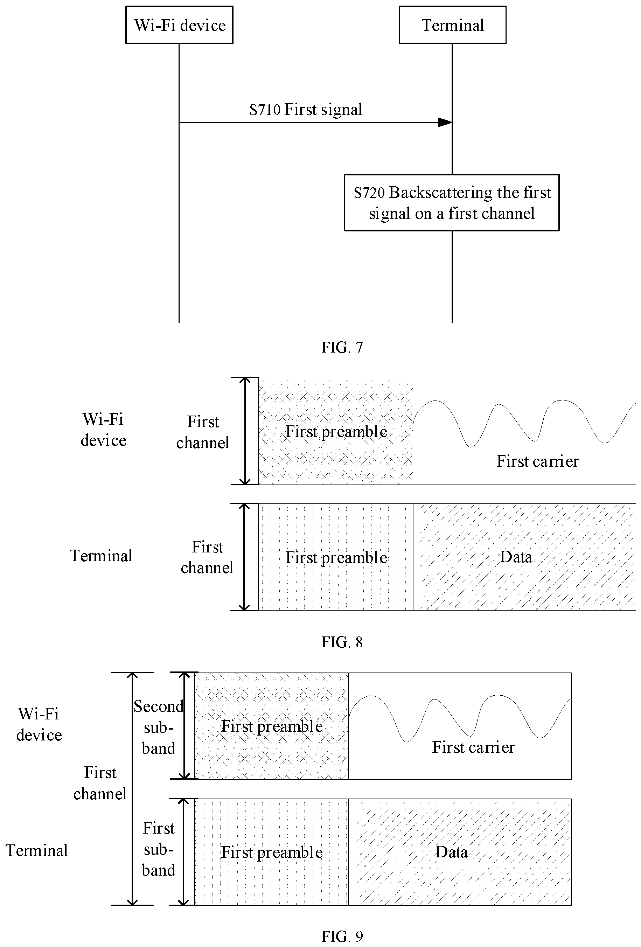

The present disclosure proposes a communication method to solve the above problems. FIG. 7 is a schematic flow chart of a communication method according to some embodiments of the present disclosure.

The method shown in FIG. 7 is executed by a terminal and a Wi-Fi device.

The terminal is a device capable of performing backscattering communication. For example, the terminal is a zero-power terminal. It should be noted that the naming of the zero-power terminal does not restrict the source and use of its energy. For example, the energy required for the operation of the zero-power terminal may come from the external environment. In this case, the zero-power terminal is zero-power or low-power. Alternatively, the energy required for the operation of the zero-power terminal may come from the power supply of the terminal itself. In this case, the zero-power terminal is a low-power terminal. The definition of a zero-power terminal mainly includes features such as low complexity, support for environmental power supply, backscattering, and new waveforms. The name of the zero-power terminal is not unique, and it may also be other names, such as an environmentally powered terminal, a terminal based on energy harvesting, and the like.

A Wi-Fi device is also referred to as a Wi-Fi node. A Wi-Fi device is a Wi-Fi wireless access point (AP). A Wi-Fi AP enables a Wi-Fi terminal to access a network. A Wi-Fi AP is, for example, a Wi-Fi wireless switch, a router, or other device.

The communication method shown in FIG. 7 includes step S710 and step S720.

In step S710, the Wi-Fi device sends a first signal on a first channel.

The first channel is any channel that meets the conditions in the frequency domain resources. For example, the first channel belongs to a channel in an unlicensed frequency band. After occupying the first channel, the Wi-Fi device sends the first signal on the first channel.

The first signal includes a first preamble and/or a first carrier.

The first preamble is a preamble included in the data frame of the Wi-Fi system described above. For example, the first preamble is a preamble part in a PLCP header that meets the 802.11 standard. As an implementation, the first preamble includes one or more of STF, LTF, and other signals.

**It** can be understood that the first preamble is generated by the terminal with the help of the Wi-Fi device. The information carried in the first preamble is set according to the needs of the terminal. For example, the information such as the duration of occupying the channel contained in the first preamble is set based on the needs of the terminal, and is not set based on the needs of the Wi-Fi device.

The first preamble is consistent with the preamble part for implementing carrier sense in the Wi-Fi system. That is, channel sensing is implemented based on the first preamble. When other Wi-Fi devices detect the first preamble, they know that the first channel for transmitting the first preamble is occupied, and thus do not send data on the first channel.

The first signal is used to be backscattered by the terminal. That is, the method shown in FIG. 7 includes step S720, in which the terminal backscatters the first signal on the first channel.

When the first signal includes the first preamble, the terminal backscatters the first signal including the first preamble on the first channel. It can be understood that even when the terminal cannot generate the preamble by itself, the terminal backscatters the first signal including the first preamble to enable the terminal to send the first preamble. For example, before sending data, the terminal backscatters the first preamble on the first channel. When other Wi-Fi devices detect the first preamble, they may know that the first channel is occupied, that is, they will not transmit data on the first channel, thereby avoiding conflicts.

The first carrier occupies part of the frequency domain resources in the first channel. For example, the first carrier occupies a frequency point or a frequency domain resource within a range in the first channel. In addition, the present disclosure does not limit the waveform of the first carrier. For example, the first carrier is a sine wave.

In the case that the first signal includes the first carrier, the terminal modulates the first carrier and transmits data by backscattering based on the first carrier. It can be understood that, based on the first carrier, other devices supporting unlicensed frequency band communication (such as Wi-Fi devices) detects that the first channel is occupied by energy detection, so that data will not be transmitted on the first channel, thereby avoiding conflicts.

It can be seen from this that when the terminal occupies the first channel for backscattering communication, other Wi-Fi devices determine that the first channel is occupied by detecting the first preamble based on the carrier sense method, and/or other Wi-Fi devices determine that the first channel is occupied by detecting the first carrier based on the energy detection method, thereby avoiding the situation where other Wi-Fi devices also occupy the first channel.

In the case that the first signal includes the first preamble, the Wi-Fi device sends the first signal over all or part of the frequency domain resources of the first channel. Accordingly, the terminal backscatters the first signal including the first preamble over all or part of the frequency domain resources of the first channel. The frequency domain resources for the Wi-Fi device to transmit the first signal and the frequency domain resources for the terminal to backscatter the first channel is the same or different.

In some embodiments, the first signal is transmitted over the first frequency domain resources. That is, the Wi-Fi device sends the first signal over the first frequency domain resources.

The first frequency domain resources are all frequency domain resources of the first channel. Alternatively, the first frequency domain resources are all available frequency domain resources of the first channel. The available frequency domain resources are frequency domain resources in the first channel that are available for communication devices to communicate. For example, the first channel includes available frequency domain resources and protected frequency domain resources. The protected frequency domain resources are used to avoid interference from other channels. The protected frequency domain resources are reserved. The protected frequency domain resources are located at the edge of the first channel. The protected frequency domain resources are generally not available for use by communication devices. The available resources are frequency domain resources in the first channel other than the protected frequency domain resources.

In the case that the first signal is transmitted over the first frequency domain resource, the terminal backscatters the first signal over the first frequency domain resources. It can be understood that the first signal includes the first preamble, so that the frequency domain resources occupied by the Wi-Fi device and the terminal for sending the first preamble are the same.

FIG. 8 is a schematic diagram of resources for transmitting a first signal and resources for backscattering the first signal according to some embodiments of the present disclosure. FIG. 8 takes the first frequency domain resources as all frequency domain resources of the first channel as an example. As shown in FIG. 8, after the Wi-Fi device occupies the first channel, before the terminal transmits data, the Wi-Fi device generates a first preamble for the terminal. The Wi-Fi device sends the first preamble to the terminal on the first channel. The terminal sends the first preamble on the first channel by backscattering. That is, in FIG. 8, both the Wi-Fi device and the terminal occupy the first channel.

It should be noted that, for ease of understanding, FIG. 8 shows the first channels occupied by the Wi-Fi device and the terminal separately. In fact, the first channels occupied by the Wi-Fi device and the terminal may overlap.

In some embodiments, in the case that the first signal includes the first carrier, the Wi-Fi device sends the first carrier over the first frequency domain resources. The terminal device transmits data (i.e., data signal) by backscattering over the first frequency domain resources based on the first carrier. It can be understood that the data signal transmitted by the terminal by backscattering is located in the same channel as the carrier signal transmitted by the Wi-Fi device.

It should be noted that the first carrier occupies part or all of the first frequency domain resources, and the present disclosure does not limit this. For example, the first carrier occupies a frequency point in the first frequency domain resources.

With continued reference to FIG. 8, after sending the first preamble, the Wi-Fi device further sends the first carrier to the terminal on the first channel. The terminal sends data on the first channel based on the first carrier by backscattering.

In some embodiments, the first signal includes a first preamble, and the first signal is transmitted on part of the frequency domain resources of the first channel. For example, the first signal is transmitted on a second sub-band. That is, the Wi-Fi device sends the first signal to the terminal on the second sub-band. The second sub-band is part of the frequency domain resources in the first channel. In some implementations, a sub-band may also be referred to as a sub-channel.

In the case that the first signal is transmitted on the second sub-band, the terminal backscatters the first preamble on the first sub-band. The first sub-band is a frequency domain resource different from the second sub-band in the first channel. That is, the frequencies occupied by the Wi-Fi device and the terminal for sending the first preamble are different.

It can be understood that the first sub-band is part of the frequency domain resources in the first channel. For example, the first sub-band is part of the frequency domain resources in the first channel. The second sub-band is part or all of the frequency domain resources in the first channel except the first sub-band. For example, the first preamble is transmitted on a part of the frequency domain resources of the first channel, and the terminal backscatters the first preamble on another part of the frequency domain resources on the first channel.

In one implementation, the Wi-Fi device and the terminal each occupy half of the frequency domain resources of the first channel. For example, the width of the first channel is 2 MHz. The first preamble transmitted by the Wi-Fi device and the first preamble backscattered by the terminal respectively occupy the upper and lower 1 MHz sub-channels of the first channel.

FIG. 9 is a schematic diagram of resources for transmitting a first signal and resources for backscattering the first signal according to some embodiments of the present disclosure. As shown in FIG. 9, after the Wi-Fi device occupies the first channel, before the terminal transmits data, the Wi-Fi device generates a first preamble for the terminal. The Wi-Fi device sends the first preamble to the terminal on the second sub-band. The terminal sends the first preamble on the first sub-band by backscattering. That is, in FIG. 9, the Wi-Fi device and the terminal occupy different frequency domain resources of the first channel to send the first preamble.

The Wi-Fi device sends a first carrier. Based on the first carrier, the terminal transmits data on the first sub-band by backscattering. The first carrier is located in frequency domain resources other than the first sub-band in the first channel. For example, the first carrier is located in the second sub-band. It can be understood that the data signal transmitted by the terminal by backscattering is located on a different frequency domain resource of the same channel as the first carrier transmitted by the Wi-Fi device.

It should be noted that, in the case that the first carrier is located in the second sub-band, the first carrier may not occupy all frequency domain resources of the second sub-band. For example, the first carrier occupies a frequency point in the second carrier.

It can be understood that the frequency domain resources used by the Wi-Fi device to send the first preamble are different from the frequency domain resources used by the terminal to backscatter the first preamble, which reduces interference between the signal transmitted by the Wi-Fi device and the signal transmitted by the terminal device.

Optionally, the Wi-Fi device also sends a second signal on the first sub-band. The second signal includes the first preamble. That is, the Wi-Fi device repeatedly sends the first preamble in two different sub-bands of the first channel. Correspondingly, the terminal backscatters the first preamble in any sub-band of the first sub-band or the second sub-band. For example, the terminal backscatters the first preamble on the first sub-band based on the first preamble transmitted in the first sub-band. Alternatively, the terminal backscatters the first preamble on the first sub-band based on the first preamble transmitted in the second sub-band.

It can be seen that the Wi-Fi device repeatedly sends the first preamble in different parts of the first channel (such as the first sub-band and the second sub-band). This allows the Wi-Fi device to transmit the first preamble at a higher transmit power, so that other Wi-Fi devices within a larger range can detect that the first channel is occupied by the Wi-Fi device, thereby avoiding other Wi-Fi devices from occupying the channel during the backscattering communication of the terminal. For example, it can avoid the situation where other Wi-Fi devices at a long distance cannot detect that the first channel is occupied due to the low transmit power of the terminal during backscattering.

For the case where the Wi-Fi device occupies part of the first channel to send the first preamble, the Wi-Fi device sends the second preamble on all frequency domain resources or all available frequency domain resources of the first channel. Since the frequency domain resources occupied by the second preamble are wider than the frequency domain resources occupied by the first preamble, the second preamble may also be referred to as a broadband preamble.

It can be understood that the sub-band is narrower than the first channel. If the terminal backscatters the first preamble on a certain sub-band, the first preamble is suitable for other Wi-Fi devices working on a channel narrower than the first channel, so that these Wi-Fi devices can find that the narrower channel (such as the first sub-band or the second sub-band) is already occupied. The second preamble may occupy the bandwidth of the entire first channel, so that the second preamble is suitable for other Wi-Fi devices that expect to work on the complete first channel, so that these Wi-Fi devices find that the entire first channel is occupied.

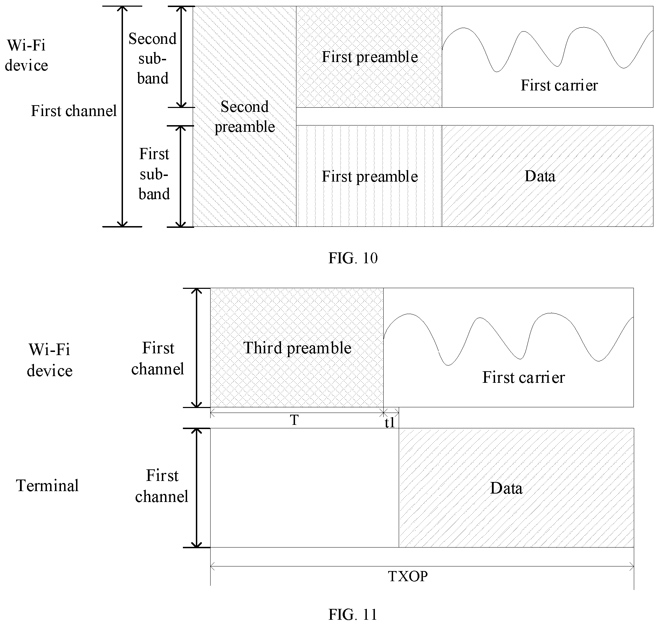

The implementation of the second preamble is described below by taking FIG. 10 as an example. As shown in FIG. 10, the terminal occupies the first sub-band in the first channel, and the Wi-Fi device occupies the second sub-band in the first channel. The width of the first channel is 2 MHz, and the first sub-band and the second sub-band are upper and lower 1 MHz sub-channels of the first channel, respectively. The second preamble transmitted by the Wi-Fi device occupies the entire first channel. Therefore, the second preamble is used for carrier sensing of the first channel by other Wi-Fi devices that expect to work on the 2 MHz first channel. The first preamble transmitted by the Wi-Fi device and the first preamble backscattered by the terminal occupies the upper and lower 1 MHz sub-channels of the first channel, respectively, and are used for carrier sensing of these sub-bands by other Wi-Fi devices that expect to work on the first sub-band and/or the second sub-band.

In some embodiments, the Wi-Fi device sends first indication information to the terminal. The first indication information instructs the terminal to backscatter the first signal.

The first channel is obtained by the Wi-Fi device in an unlicensed frequency band. The Wi-Fi device obtains the first channel, for example, by LBT. The Wi-Fi device sends a third preamble to allow other Wi-Fi devices to know that the first channel is occupied.

The Wi-Fi device shares the first channel with the terminal through the first indication information to instruct the terminal to perform backscattering on the first channel. For example, after obtaining the first channel, the Wi-Fi device sends an indication of channel occupancy of the first channel and shares the resources of the occupied first channel with the terminal for backscattering communication.

The present disclosure does not limit the manner in which the Wi-Fi device shares the resources of the first channel. For example, the Wi-Fi device shares the duration of occupying the first channel with the terminal.

As an implementation, the first indication information includes a first transmission duration and/or a first start time. The first transmission duration is the transmission duration during which the terminal is capable of occupying the first channel. The terminal occupies the first channel for part or all of the first transmission duration. The first start time is a start time when the terminal is capable of occupying the first channel. The terminal starts occupying the first channel after the first start time.

The first transmission duration is part of a total duration indicated by a contention transmission opportunity (TXOP) occupied by the Wi-Fi device. It can be understood that after the Wi-Fi device obtains the first channel, the total duration that the Wi-Fi device expects to occupy the first channel is sent through the TXOP, and part of the total duration is shared with the terminal. Optionally, the first transmission duration is all or part of the total duration indicated by the TXOP except for a duration occupied by the Wi-Fi device for communication. The duration occupied by the Wi-Fi device for communication includes the duration of sending the third preamble and/or the duration of sending the data signal.

The start time of backscattering communication of the terminal device is determined according to an end time of the Wi-Fi device occupying the first channel for communication. For example, the start time of the backscattering communication of the terminal device is equal to or later than the end time of the Wi-Fi device occupying the first channel for communication. It can be understood that the first start time in the first indication information is also determined according to the end time of the Wi-Fi device occupying the first channel for communication.

As an implementation, there is an interval between the start time of the backscattering communication of the terminal device and the end time of the communication of the Wi-Fi device. The interval is less than or equal to a first threshold. The first threshold is 16 microseconds.

It can be understood that the interval between the start time of the terminal device's backscattering communication and the end time of the Wi-Fi device's communication being less than the first threshold avoids the first channel being occupied by other Wi-Fi devices after the Wi-Fi device ends communication and within the total duration indicated by the TXOP.

The Wi-Fi device sends a first carrier for the terminal to perform backscattering communication. The first carrier is sent at any time between the end of the communication of the Wi-Fi device and the start of the backscattering communication of the terminal, and the present disclosure does not impose any limitation on this.

It can be understood that, compared with the terminal performing backscattering, the Wi-Fi device is a node with higher capabilities. That is, the Wi-Fi device sends a PPDU or preamble (hereinafter referred to as a third preamble) that is compatible with other Wi-Fi devices in the Wi-Fi communication system. Therefore, when other Wi-Fi devices detect the third preamble sent by the Wi-Fi device, it may be determined that the channel is busy. Other Wi-Fi devices also delay their access time according to the indication of the TXOP sent by the Wi-Fi device. Therefore, when the terminal sends a signal by backscattering, the terminal may not send a preamble compatible with other Wi-Fi devices, so that other Wi-Fi devices know that the first channel is occupied.

FIG. 11 is a schematic diagram of a Wi-Fi device and a terminal sharing a first channel according to some embodiments of the present disclosure. As shown in FIG. 11, within the total duration indicated by the TXOP, the Wi-Fi device occupies a duration T, and the remaining TXOP duration is shared with the terminal for use. The remaining TXOP duration is a first transmission duration. The Wi-Fi device instructs the terminal, by the first indication information, to transmit within the remaining TXOP duration. Upon receiving the first indication information, the terminal performs backscattering communication within the remaining TXOP duration. After the duration T ends, the terminal starts backscattering communication at an interval of t1. T1 is less than 16 microseconds. After T ends, the Wi-Fi device sends a first carrier for the terminal to perform backscattering communication.

It should be noted that the Wi-Fi device also shares the acquired first channel with a plurality of terminals. The plurality of terminals may occupy the first channel for backscattering communication. The Wi-Fi device sends corresponding first indication information to the plurality of terminals respectively to indicate the allocation of the first channel.

The present disclosure does not limit the specific manner in which a plurality of terminals and Wi-Fi devices share the first channel. For example, each terminal sequentially occupies the first channel for backscattering communication.

There is an interval between the times when different terminals occupy the first channel for backscattering communication. The interval is less than or equal to a second threshold. The second threshold may be, for example, 16 microseconds.

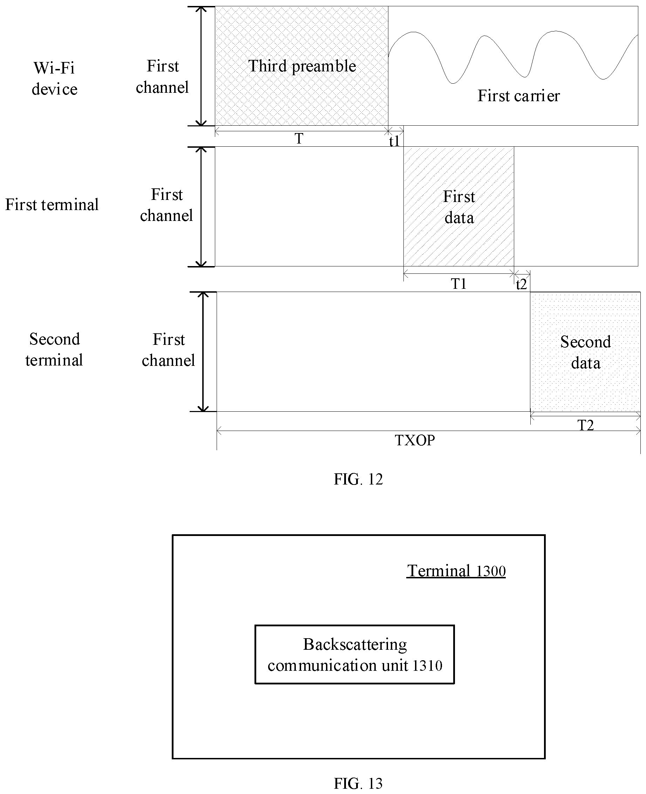

FIG. 12 is a schematic diagram of a Wi-Fi device and two terminals sharing a first channel according to some embodiments of the present disclosure. The two terminals include a first terminal and a second terminal, respectively. As shown in FIG. 12, within the total duration indicated by the TXOP, the Wi-Fi device occupies a duration T, and the remaining TXOP duration is shared by the two terminals. The Wi-Fi device indicates that the first terminal transmits within a duration T1 by the first indication information of the first terminal. Upon receiving the first indication information, the first terminal performs backscattering communication within the duration T1. After the duration T ends, the first terminal starts backscattering communication at an interval of duration t1. T1 is less than 16 microseconds. The Wi-Fi device indicates that the second terminal transmits within a duration T2 by the first indication information of the second terminal. Upon receiving the first indication information, the second terminal sends data by backscattering within the duration T2. After the duration T1 ends, the second terminal starts backscattering communication at an interval of duration t2. T2 is less than 16 microseconds. After T ends, the Wi-Fi device sends the first carrier for the first terminal and the second terminal to perform backscattering communication.

The method embodiments of the present disclosure are described in detail in conjunction with FIGS. 1 to 12, and device embodiments of the present disclosure will be described in detail in conjunction with FIGS. 13 to 15. It should be understood that the description of the method embodiments corresponds to the description of the device embodiments, and therefore, regarding the part that is not described in detail, reference may be made to the previous method embodiments.

FIG. 13 is a schematic structural diagram of a terminal 1300 according to some embodiments of the present disclosure. The terminal 1300 includes a backscattering unit 1310.

The backscattering unit 1310 is configured to backscatter a first signal on a first channel. The first signal includes a first preamble and/or a first carrier, and the first signal is sent by a Wi-Fi device.

Optionally, in the case that the first signal includes the first preamble, the backscattering unit 1310 is configured to backscatter the first signal over first frequency domain resources. The first frequency domain resources comprise all frequency domain resources or all available frequency domain resources of the first channel.

Optionally, the first signal is transmitted over the first frequency domain resources.

Optionally, in the case that the first signal includes the first carrier, the terminal 1300 is further configured to transmit data over the first frequency domain resources by backscattering based on the first carrier.

Optionally, in the case that the first signal includes the first preamble, the backscattering unit 1310 is configured to backscatter the first signal on a first sub-band. The first sub-band is part of the frequency domain resources in the first channel.

Optionally, the first signal is transmitted on a second sub-band, and the second sub-band is part or all of the frequency domain resources, except the first sub-band, in the first channel.

Optionally, in the case that the first signal includes the first carrier, the terminal 1300 is further configured to transmit data on the first sub-band by backscattering based on the first carrier.

Optionally, the first carrier is located in frequency domain resources, other than the first sub-band, in the first channel.

Optionally, the first preamble includes a short training field (STF) and/or a long training field (LTF).

Optionally, the terminal 1300 is further configured to receive first indication information from the Wi-Fi device;

Optionally, the first indication information instructs the terminal to backscatter the first signal.

Optionally, the first channel is a channel obtained by the Wi-Fi device in an unlicensed frequency band.

Optionally, the first indication information includes a first transmission duration and/or a first start time. The first transmission duration is the transmission duration during which the terminal is capable of occupying the first channel, and the first start time is a start time when the terminal is capable of occupying the first channel.

Optionally, in the case that the first indication information includes the first transmission duration, the first transmission duration is part of a total duration indicated by a contention transmission opportunity (TXOP) occupied by the Wi-Fi device.

Optionally, the first transmission duration is all or part of the total duration except a duration occupied by the Wi-Fi device for communication.

Optionally, a time interval between a start time of backscattering communication of the terminal and an end time of communication of the Wi-Fi device is less than or equal to a first threshold.

Optionally, the first threshold is 16 microseconds.

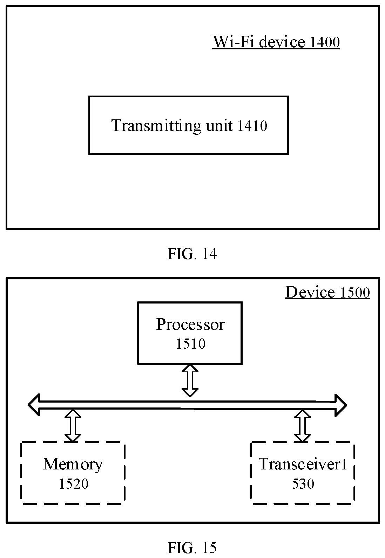

FIG. 14 is a schematic structural diagram of a Wi-Fi device 1400 according to some embodiments of the present disclosure. The Wi-Fi device 1400 includes a sending unit 1410.

The sending unit 1410 is configured to send a first signal on a first channel. The first signal includes a first preamble and/or a first carrier, and the first signal is used to be backscattered by a terminal.

Optionally, in the case that the first signal includes the first preamble, the first signal is used to be backscattered by the terminal over first frequency domain resources, and the first frequency domain resources include all frequency domain resources or all available frequency domain resources of the first channel.

Optionally, the first signal occupies the first frequency domain resources for transmission.

Optionally, in the case that the first signal includes the first carrier, the first carrier is used for the terminal to transmit data over the first frequency domain resources by backscattering.

Optionally, in the case that the first signal includes the first preamble, the first signal is used to be backscattered by the terminal on a first sub-band. The first sub-band is part of the frequency domain resources in the first channel.

Optionally, the first signal is transmitted on a second sub-band, and the second sub-band is part or all of the frequency domain resources, except the first sub-band, in the first channel.

Optionally, the Wi-Fi device 1400 is further configured to send a second signal on the first sub-band. The second signal includes the first preamble.

Optionally, in the case that the first signal includes the first carrier, the first carrier is used for the terminal to transmit data on the first sub-band by backscattering.

Optionally, the first carrier is located in frequency domain resources other than the first sub-band in the first channel.

Optionally, the Wi-Fi device 1400 is further configured to send a second preamble over all frequency domain resources or all available frequency domain resources of the first channel.

Optionally, the first preamble includes a short training field (STF) and/or a long training field (LTF).

Optionally, the Wi-Fi device 1400 is further configured to send first indication information to the terminal. The first indication information instructs the terminal to backscatter the first signal.

Optionally, the first channel is a channel obtained by the Wi-Fi device in an unlicensed frequency band.

Optionally, the first indication information includes a first transmission duration and/or a first start time. The first transmission duration is the transmission duration during which the terminal is capable of occupying the first channel, and the first start time is a start time when the terminal is capable of occupying the first channel.

Optionally, in the case that the first indication information includes the first transmission duration, the first transmission duration is part of a total duration indicated by a contention transmission opportunity (TXOP) occupied by the Wi-Fi device.

Optionally, the first transmission duration is all or part of the total duration except a duration occupied by the Wi-Fi device for communication.

Optionally, a time interval between a start time of backscattering communication of the terminal and an end time of communication of the Wi-Fi device is less than or equal to a first threshold.

Optionally, the first threshold is 16 microseconds.

FIG. 15 is a schematic structural diagram of a communication device according to some embodiments of the present disclosure. The dotted lines in FIG. 15 indicate that the unit or module is optional. The device 1500 is configured to implement the method described in the above method embodiments. The device 1500 is a chip, a terminal device, or a Wi-Fi device.

The device 1500 includes one or more processors 1510. The processor 1510 supports the device 1500 to implement the method described in the above method embodiments. The processor 1510 is a general-purpose processor or a special-purpose processor. For example, the processor is a central processing unit (CPU). Alternatively, the processor is other general-purpose processors, digital signal processors (DSP), application specific integrated circuits (ASIC), field programmable gate arrays (FPGA) or other programmable logic devices, discrete gate or transistor logic devices, discrete hardware components, etc. A general-purpose processor is a microprocessor or the processor is any conventional processor, etc.

The device 1500 further includes one or more memories 1520. The memory 1520 stores a program, which is executed by the processor 1510, so that the processor 1510 carries out the method described in the above method embodiments. The memory 1520 is independent of the processor 1510 or integrated in the processor 1510.

The device 1500 further includes a transceiver 1530. The processor 1510 communicates with other devices or chips through the transceiver 1530. For example, the processor 1510 transmits and receives data with other devices or chips through the transceiver 1530.

Some embodiments of the present disclosure also provide a computer-readable storage medium for storing one or more programs. The computer-readable storage medium is applicable to a terminal or network device according to the present disclosure, and the one or more programs, when loaded and run by a computer, cause the computer to carry out the method performed by the terminal or network device in the embodiments of the present disclosure.

Some embodiments of the present disclosure also provide a computer program product. The computer program product includes one or more programs. The computer program product is applicable to the terminal or network device according to the embodiments of the present disclosure, and the one or more programs, when loaded and executed by a computer, cause the computer to carry out the method performed by the terminal or network device in the embodiments of the present disclosure.

Some embodiments of the present disclosure also provide a computer program. The computer program is applicable to the terminal or network device according to the embodiments of the present disclosure, and the computer program, when loaded and run by a computer, causes the computer to carry out the method performed by the terminal or network device in the embodiments of the present disclosure.

**It** should be understood that the terms "system" and "network" in the present disclosure may be used interchangeably. In addition, the terms used in the present disclosure are only used to explain the specific embodiments of the present disclosure, and are not intended to limit the present disclosure. The terms "first", "second", "third" and "fourth" in the specification and claims of the present disclosure and the accompanying drawings are used to distinguish different objects, rather than to describe a specific order. In addition, the terms "including" and "having" and any of their variations are intended to cover non-exclusive inclusions.

In the embodiments of the present disclosure, the "indication" mentioned may be a direct indication, an indirect indication, or an indication of an association relationship. For example, A indicates B, which can mean that A directly indicates B, for example, B may be obtained through A; it may also mean that A indirectly indicates B, for example, A indicates C, B may be obtained through C; it may also mean that there is an association relationship between A and B.

In the embodiments of the present disclosure, "B corresponding to A" means that B is associated with A, and B is determined based on A. However, it should be understood that determining B based on A does not mean determining B only based on A, and B may also be determined based on A and/or other information.

In the embodiments of the present disclosure, the term "corresponding" may indicate that there is a direct or indirect correspondence between the two, or an association relationship between the two, or a relationship of indication and being indicated, configuration and being configured, etc.

In the embodiments of the present disclosure, "pre-definition" or "pre-configuration" is implemented by pre-saving corresponding codes, tables or other methods that may be configured to indicate relevant information in a device (for example, including a terminal device and a network device), and the present disclosure does not limit the specific implementation. For example, pre-definition may refer to what is defined in the protocol.

In the embodiments of the present disclosure, the "protocol" refers to a standard protocol in the communication field. For example, it may include an LTE protocol, an NR protocol, and related protocols used in future communication systems, and the present disclosure does not limit this.

In the embodiments of the present disclosure, the term "and/or" is only a description of the association relationship of the associated objects, indicating that there may be three relationships. For example, A and/or B can represent: A exists alone, A and B exist at the same time, and B exists alone. In addition, the character "/" in this article generally indicates that the associated objects before and after are in an "or" relationship.

In various embodiments of the present disclosure, the serial numbers of the above-mentioned processes does not mean the order of execution. The execution order of each process should be determined by its function and internal logic, and should not constitute any limitation on the implementation process of the embodiments of the present disclosure.

In the several embodiments according to the present disclosure, it should be understood that the disclosed systems, devices and methods may be implemented in other ways. For example, the device embodiments described above are only schematic. For example, the division of the units is only a logical function division. There may be other division methods in actual implementation, such as a plurality of units or components may be combined or integrated into another system, or some features may be ignored or not executed. Another point is that the mutual coupling or direct coupling or communication connection shown or discussed may be through some interfaces, indirect coupling or communication connection of devices or units, which may be electrical, mechanical or other forms.

The units described as separate components may or may not be physically separated, and the components shown as units may or may not be physical units, that is, they may be located in one place or distributed on a plurality of network units. Some or all of the units may be selected according to actual needs to achieve the purpose of the solution of this embodiment.

In addition, each functional unit in each embodiment of the present disclosure may be integrated into one processing unit, or each unit may exist physically separately, or two or more units may be integrated into one unit.

In the above embodiments, it may be implemented in whole or in part by software, hardware, firmware or any combination thereof. When implemented by software, it may be implemented in whole or in part in the form of a computer program product. The computer program product includes one or more computer instructions. When the computer program instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer-readable storage medium, or transmitted from one computer-readable storage medium to another computer-readable storage medium. For example, the computer instructions may be transmitted from a website site, computer, server or data center by wired (e.g., coaxial cable, optical fiber, digital subscriber line (DSL)) or wireless (e.g., infrared, wireless, microwave, etc.) mode to another website site, computer, server or data center. The computer-readable storage medium may be any available medium that may be read by a computer or a data storage device such as a server or data center that includes one or more available media integrated. The available medium may be a magnetic medium (e.g., a floppy disk, a hard disk, a magnetic tape), an optical medium (e.g., a digital versatile disk (DVD)), or a semiconductor medium (e.g., a solid state drive (SSD)).

The foregoing is only a specific implementation of the present disclosure, but the protection scope of the present disclosure is not limited thereto. Any technician familiar with the technical field can easily think of changes or substitutions within the technical scope disclosed in the present disclosure, which should be included in the protection scope of the present disclosure. Therefore, the protection scope of the present disclosure should be based on the protection scope of the claims.

## Claims

1. A communication method, applicable to a terminal, the method comprising:
backscattering a first signal on a first channel;
wherein the first signal comprises a first preamble and/or a first carrier, and the first signal is sent by a Wi-Fi device.

2. The communication method according to claim 1, wherein in a case that the first signal comprises the first preamble,
backscattering the first signal on the first channel comprises: backscattering the first signal over first frequency domain resources;
wherein the first frequency domain resources comprise all frequency domain resources or all available frequency domain resources of the first channel.

3. The communication method according to claim 2, wherein the first signal is transmitted over the first frequency domain resources.

4. The communication method according to claim 2 or 3, wherein in a case that the first signal comprises the first carrier, the communication method further comprises:
transmitting data over the first frequency domain resources by backscattering based on the first carrier.

5. The communication method according to claim 1, wherein in a case that the first signal comprises the first preamble,
backscattering the first signal on the first channel comprises: backscattering the first signal on a first sub-band;
wherein the first sub-band is part of the frequency domain resources in the first channel.

6. The communication method according to claim 5, wherein the first signal is transmitted on a second sub-band, and the second sub-band is part or all of the frequency domain resources, except the first sub-band, in the first channel.

7. The communication method according to claim 5 or 6, wherein in a case that the first signal comprises the first carrier, the communication method further comprises:
transmitting data on the first sub-band by backscattering based on the first carrier.

8. The communication method according to claim 7, wherein the first carrier is located in frequency domain resources, other than the first sub-band, in the first channel.

9. The communication method according to any one of claims 1 to 8, wherein the first preamble comprises a short training field (STF) and/or a long training field (LTF).

10. The communication method according to any one of claims 1 to 9, further comprising:
receiving first indication information from the Wi-Fi device;
wherein the first indication information instructs the terminal to backscatter the first signal.

11. The communication method according to claim 10, wherein the first channel is a channel obtained by the Wi-Fi device in an unlicensed frequency band.

12. The communication method according to claim 10 or 11, wherein:
the first indication information comprises a first transmission duration and/or a first start time;
wherein the first transmission duration is a transmission duration during which the terminal is capable of occupying the first channel, and the first start time is a start time when the terminal is capable of occupying the first channel.

13. The communication method according to claim 12, wherein in a case that the first indication information comprises the first transmission duration, the first transmission duration is part of a total duration indicated by a contention transmission opportunity (TXOP) occupied by the Wi-Fi device.

14. The communication method according to claim 13, wherein the first transmission duration is all or part of the total duration except a duration occupied by the Wi-Fi device for communication.

15. The communication method according to any one of claims 10 to 14, wherein a time interval between a start time of backscattering communication of the terminal and an end time of communication of the Wi-Fi device is less than or equal to a first threshold.

16. The communication method according to claim 15, wherein the first threshold is 16 microseconds.

17. A communication method, applicable to a Wi-Fi device, the method comprising:
sending a first signal on a first channel;
wherein the first signal comprises a first preamble and/or a first carrier, and the first signal is used to be backscattered by the terminal.

18. The communication method according to claim 17, wherein in a case that the first signal comprises the first preamble, the first signal is used to be backscattered by the terminal over first frequency domain resources, and the first frequency domain resources comprise all frequency domain resources or all available frequency domain resources of the first channel.

19. The communication method according to claim 18, wherein the first signal occupies the first frequency domain resources for transmission.

20. The communication method according to claim 18 or 19, wherein in a case that the first signal comprises the first carrier, the first carrier is used for the terminal to transmit data over the first frequency domain resources by backscattering.

21. The communication method according to claim 17, wherein in a case that the first signal comprises the first preamble, the first signal is used to be backscattered by the terminal on a first sub-band,
wherein the first sub-band is part of the frequency domain resources in the first channel.

22. The communication method according to claim 21, wherein the first signal is transmitted over a second sub-band, and the second sub-band is part or all of the frequency domain resources, except the first sub-band, in the first channel.

23. The communication method according to claim 22, further comprising:
sending a second signal on the first sub-band, wherein the second signal comprises the first preamble.

24. The communication method according to any one of claims 21 to 23, wherein in a case that the first signal comprises the first carrier, the first carrier is used for the terminal to transmit data on the first sub-band by backscattering.

25. The communication method according to claim 24, wherein the first carrier is located in frequency domain resources other than the first sub-band in the first channel.

26. The communication method according to any one of claims 21 to 25, further comprising:
sending a second preamble over all frequency domain resources or all available frequency domain resources of the first channel.

27. The communication method according to any one of claims 17 to 26, wherein the first preamble comprises a short training field (STF) and/or a long training field (LTF).

28. The communication method according to any one of claims 17 to 27, further comprising:
sending first indication information to the terminal;
wherein the first indication information instructs the terminal to backscatter the first signal.

29. The communication method according to claim 28, wherein the first channel is a channel obtained by the Wi-Fi device in an unlicensed frequency band.

30. The communication method according to claim 28 or 29, wherein:
the first indication information comprises a first transmission duration and/or a first start time;
wherein the first transmission duration is a transmission duration during which the terminal is capable of occupying the first channel, and the first start time is a start time when the terminal is capable of occupying the first channel.

31. The communication method according to claim 30, wherein, in a case that the first indication information comprises the first transmission duration, the first transmission duration is part of a total duration indicated by a contention transmission opportunity (TXOP) occupied by the Wi-Fi device.

32. The communication method according to claim 31, wherein the first transmission duration is all or part of the total duration except a duration occupied by the Wi-Fi device for communication.

33. The communication method according to any one of claims 28 to 32, wherein a time interval between a start time of backscattering communication of the terminal and an end time of communication of the Wi-Fi device is less than or equal to a first threshold.

34. The communication method according to claim 33, wherein the first threshold is 16 microseconds.

35. A terminal, comprising:
a backscattering unit configured to backscatter a first signal on a first channel;
wherein the first signal comprises a first preamble and/or a first carrier, and the first signal is sent by a Wi-Fi device.

36. The terminal according to claim 35, wherein in a case that the first signal comprises the first preamble,
the backscattering unit is configured to backscatter the first signal over first frequency domain resources;
wherein the first frequency domain resources comprise all frequency domain resources or all available frequency domain resources of the first channel.

37. The terminal according to claim 36, wherein the first signal is transmitted over the first frequency domain resources.

38. The terminal according to claim 36 or 37, wherein in a case that the first signal comprises the first carrier, the terminal is further configured to:
transmit data over the first frequency domain resources by backscattering based on the first carrier.

39. The terminal according to claim 35, wherein, in a case that the first signal comprises the first preamble,
the backscattering unit is configured to backscatter the first signal on a first sub-band;
wherein the first sub-band is part of the frequency domain resources in the first channel.

40. The terminal according to claim 39, wherein the first signal is transmitted on a second sub-band, and the second sub-band is part or all of the frequency domain resources, except the first sub-band, in the first channel.

41. The terminal according to claim 39 or 40, wherein in a case that the first signal comprises the first carrier, the terminal is further configured to:
transmit data on the first sub-band by backscattering based on the first carrier.

42. The terminal according to claim 41, wherein the first carrier is located in frequency domain resources, other than the first sub-band, in the first channel.

43. The terminal according to any one of claims 35 to 42, wherein the first preamble comprises a short training field (STF) and/or a long training field (LTF).

44. The terminal according to any one of claims 35 to 43, wherein the terminal is further configured to:
receive first indication information from the Wi-Fi device;
wherein the first indication information instructs the terminal to backscatter the first signal.

45. The terminal according to claim 44, wherein the first channel is a channel obtained by the Wi-Fi device in an unlicensed frequency band.

46. The terminal according to claim 44 or 45, wherein:
the first indication information comprises a first transmission duration and/or a first start time;
wherein the first transmission duration is a transmission duration during which the terminal is capable of occupying the first channel, and the first start time is a start time when the terminal is capable of occupying the first channel.

47. The terminal according to claim 46, wherein in a case that the first indication information comprises the first transmission duration, the first transmission duration is part of a total duration indicated by a contention transmission opportunity (TXOP) occupied by the Wi-Fi device.

48. The terminal according to claim 47, wherein the first transmission duration is all or part of the total duration except a duration occupied by the Wi-Fi device for communication.

49. The terminal according to any one of claims 44 to 48, wherein a time interval between a start time of backscattering communication of the terminal and an end time of communication of the Wi-Fi device is less than or equal to a first threshold.

50. The terminal according to claim 49, wherein the first threshold is 16 microseconds.

51. A Wi-Fi device, comprising:
a sending unit configured to send a first signal on a first channel;
wherein the first signal comprises a first preamble and/or a first carrier, and the first signal is used to be backscattered by a terminal.

52. The Wi-Fi device according to claim 51, wherein in a case that the first signal comprises the first preamble, the first signal is used to be backscattered by the terminal over first frequency domain resources, and the first frequency domain resources comprise all frequency domain resources or all available frequency domain resources of the first channel.

53. The Wi-Fi device according to claim 52, wherein the first signal occupies the first frequency domain resources for transmission.

54. The Wi-Fi device according to claim 52 or 53, wherein in a case that the first signal comprises the first carrier, the first carrier is used for the terminal to transmit data over the first frequency domain resources by backscattering.

55. The Wi-Fi device according to claim 51, wherein in a case that the first signal comprises the first preamble, the first signal is used to be backscattered by the terminal on a first sub-band,
wherein the first sub-band is part of the frequency domain resources in the first channel.

56. The Wi-Fi device according to claim 55, wherein the first signal is transmitted on a second sub-band, and the second sub-band is part or all of the frequency domain resources, except the first sub-band, in the first channel.

57. The Wi-Fi device according to claim 56, wherein the Wi-Fi device is further configured to:
send a second signal on the first sub-band, the second signal comprising the first preamble.

58. The Wi-Fi device according to any one of claims 55 to 57, wherein in a case that the first signal comprises the first carrier, the first carrier is used for the terminal to transmit data on the first sub-band by backscattering.

59. The Wi-Fi device according to claim 58, wherein the first carrier is located in frequency domain resources other than the first sub-band in the first channel.

60. The Wi-Fi device according to any one of claims 55 to 59, wherein the Wi-Fi device is further configured to:
send a second preamble over all frequency domain resources or all available frequency domain resources of the first channel.

61. The Wi-Fi device according to any one of claims 51 to 60, wherein the first preamble comprises a short training field (STF) and/or a long training field (LTF).

62. The Wi-Fi device according to any one of claims 51 to 61, wherein the Wi-Fi device is further configured to:
send first indication information to the terminal;
wherein the first indication information instructs the terminal to backscatter the first signal.

63. The Wi-Fi device according to claim 62, wherein the first channel is a channel obtained by the Wi-Fi device in an unlicensed frequency band.

64. The Wi-Fi device according to claim 62 or 63, wherein:
the first indication information comprises a first transmission duration and/or a first start time;
the first transmission duration is a transmission duration during which the terminal is capable of occupying the first channel, and the first start time is a start time when the terminal is capable of occupying the first channel.

65. The Wi-Fi device according to claim 64, wherein in a case that the first indication information comprises the first transmission duration, the first transmission duration is part of a total duration indicated by a contention transmission opportunity (TXOP) occupied by the Wi-Fi device.

66. The Wi-Fi device according to claim 65, wherein the first transmission duration is all or part of the total duration except a duration occupied by the Wi-Fi device for communication.

67. The Wi-Fi device according to any one of claims 62 to 66, wherein a time interval between a start time of backscattering communication of the terminal and an end time of communication of the Wi-Fi device is less than or equal to a first threshold.

68. The Wi-Fi device according to claim 67, wherein the first threshold is 16 microseconds.

69. A terminal, comprising a processor and a memory configured to store one or more programs, wherein the processor, when calling and running one or more programs, is caused to perform the method as defined in any one of claims 1 to 16.

70. A network device, comprising a processor and a memory configured to store one or more programs, wherein the processor, when calling and running one or more programs, is caused to perform the method as defined in any one of claims 17 to 34.

71. A device, comprising a processor, wherein the processor, when calling and running one or more programs stored in a memory, causes the device to perform the method as defined in any one of claims 1 to 16.

72. A device, comprising a processor, wherein the processor, when calling and running one or more programs stored in a memory, causes the device to perform the method as defined in any one of claims 17 to 34.

73. A chip, comprising a processor, wherein the processor, when calling and running one or more programs stored in a memory, causes a device equipped with the chip to perform the method as defined in any one of claims 1 to 16.

74. A chip, comprising a processor, wherein the processor, when calling and running one or more programs stored in a memory, causes a device equipped with the chip to perform the method as defined in any one of claims 17 to 34.

75. A computer-readable storage medium storing one or more programs therein, wherein the one or more programs, when loaded and run by a computer, cause the computer to perform the method as defined in any one of claims 1 to 16.

76. A computer-readable storage medium storing one or more programs therein, wherein the one or more programs, when loaded and run by a computer, cause the computer to perform the method as defined in any one of claims 17 to 34.

77. A computer program product, comprising one or more programs, wherein the one or more programs, when loaded and executed by a computer, cause the computer to perform the method as defined in any one of claims 1 to 16.

78. A computer program product, comprising one or more programs, wherein the one or more programs, when loaded and executed by a computer, cause the computer to perform the method as defined in any one of claims 17 to 34.

79. A computer program, wherein the computer program, when loaded and run by a computer, causes the computer to perform the method as defined in any one of claims 1 to 16.

80. A computer program, wherein the computer program, when loaded and run by a computer, causes the computer to perform the method as defined in any one of claims 17 to 34.
